# EUROPÄISCHE PATENTSCHRIFT

(11) **EP 1 694 538 B1**
(45) Veröffentlichungstag und Bekanntmachung des Hinweises auf die Patenterteilung: **19.09.2007**
(21) Anmeldenummer: 05744031.5
(22) Anmeldetag: 06.04.2005
(51) Int. Cl.: B60R 21/20

(54) **VORRICHTUNG ZUR VERBINDUNG EINES AIRBAGMODULS MIT EINEM TRAGENDEN FAHRZEUGTEIL**
DEVICE FOR CONNECTION OF AN AIRBAG MODULE TO A SUPPORTING VEHICLE COMPONENT
DISPOSITIF PERMETTANT DE RELIER UN MODULE AIRBAG A UNE PARTIE SUPPORT DE VEHICULE

(30) Priorität: 08.04.2004 DE 202004005994 U
(43) Veröffentlichungstag der Anmeldung: 30.08.2006
(73) Patentinhaber: Takata-Petri AG, 63743 Aschaffenburg (DE)
(72) Erfinder: LAUE, Andreas, 63820 Elsenfeld (DE); HODAC, Hung, 63843 Niedernberg (DE)
(74) Vertreter: Baumgärtel, Gunnar
(86) Internationale Anmeldenummer: PCT/DE2005/000646
(87) Internationale Veröffentlichungsnummer: WO 2005/097556

(56) Entgegenhaltungen:
- EP-A- 1 101 661
- EP-A- 1 245 462
- DE-A1- 10 155 856
- US-A- 5 333 897

## Beschreibung

Die Erfindung betrifft eine Vorrichtung zur Verbindung eines Airbagmoduls mit einem tragenden Fahrzeugteil nach dem Oberbegriff des Anspruchs 1. Eine solche Vorrichtung ist z.B. aus der US 5333897 bekannt.

Eine derartige Vorrichtung umfasst ein Spreizelement, das an einer der beiden zu verbindenden Baugruppen angeordnet ist; eine Rastöffnung, die an der anderen der beiden zu verbindenden Baugruppen vorgesehen ist und in die das Spreizelement derart einführbar ist, dass es nach dem Einführen in die Rastöffnung eine Rastposition einnehmen kann, in der es den Rand der Rastöffnung in gespreiztem Zustand hintergreift; sowie ein Sicherungselement, das mit dem Spreizelement derart in Eingriff bringbar ist, dass es das Spreizelement in dem gespreizten Zustand, in dem dieses den Rand der Rastöffnung hintergreift, festhält. Eine derartige Rastverbindung zwischen einem Airbagmodul und einem zugeordneten tragenden Fahrzeugteil, zum Beispiel einem. Lenkrad, hat den Vorteil, dass sie sich sehr einfach herstellen lässt, indem die beiden miteinander zu verbindenden Baugruppen zusammengesteckt werden, wobei mindestens ein Spreizelement an der einen Baugruppe in mindestens eine Rastöffnung der anderen Baugruppe eingeführt und dabei radial komprimiert wird, so dass es sich durch die Rastöffnung hindurchführen lässt, und sich anschließend wieder radial aufweitet, so dass eine formschlüssige Verbindung (Rastverbindung) zwischen den beiden miteinander zu verbindenden Baugruppen besteht. Derartige Rastverbindungen auf der Basis eines Spreizelementes haben jedoch den Nachteil, dass beim Auftreten sehr hoher Kräfte an den Verbindungsstellen ein gewisses Risiko besteht, dass sich die Verbindung (unter Deformation des Spreizelementes) löst. Solche Kräfte können an den Verbindungsstellen zwischen einem Airbagmodul und einem tragenden Teil einer Fahrzeugkarosserie, zum Beispiel einem Lenkrad, insbesondere dann auftreten, wenn infolge einer starken Fahrzeugverzögerung, also einem so genannten Crash-Fall, das Airbagmodul ausgelöst wird und der Gassack des Airbagmoduls zum Schutz eines Fahrzeuginsassen innerhalb von Millisekunden aufgeblasen wird, wobei ein entsprechender Rückstoß auftritt.

Um ein unbeabsichtigtes Lösen der Verbindung zwischen dem Airbagmodul und einem zugeordneten tragenden Fahrzeugteil zu verhindern, ist es aus dem dokument LO 2005080145 bekannt, mit dem Spreizelement ein Sicherungselement in Eingriff zu bringen, dass das Spreizelement im aufgespreizten Zustand hält, indem es den Rand der zugeordneten Rastöffnung hintergreift. Diese Sicherung der Verbindung zwischen einem jeweiligen Spreizelement und einer zugeordneten Rastöffnung hat jedoch den Nachteil, dass mit dem jeweiligen Spreizelement ein zugeordnetes Sicherungselement, zum Beispiel in Form eines Sicherungsstiftes, in Eingriff gebracht werden muss, was bei schwieriger Zugänglichkeit der einzelnen Verbindungsstellen die Montage beeinträchtigt. Ferner kann hierdurch auch die Demontage der Verbindung erheblich erschwert werden. Denn aufgrund des Sicherungselementes ist es nicht möglich, diese. Verbindung einfach dadurch zu lösen, dass das Spreizelement an seinem Spreizabschnitt zusammengedrückt und durch die Rastöffnung hindurch bewegt wird, da das Sicherungselement ja das Spreizelement in der aufgespreizten Stellung hält und arretiert. Somit ist es bei einer Demontage der Verbindung, zum Beispiel zu Reparatur- oder Servicezwecken, notwendig, zunächst aus jedem Spreizelement das dort befindliche Sicherungselement zu entnehmen. Bei schwerer Zugänglichkeit des Airbagmoduls in einem Kraftfahrzeug wird die Demontage hierdurch deutlich erschwert.

Der Erfindung liegt das Problem zugrunde, eine Vorrichtung zur Verbindung eines Airbagmoduls mit einem tragenden Fahrzeugteil eines Kraftfahrzeugs der eingangs genannten Art weiter zu verbessern.

Dieses Problem wird erfindungsgemäß durch die Schaffung einer Vorrichtung mit den Merkmalen des Anspruchs 1 gelöst.

Danach ist das Sicherungselement ursprünglich lösbar mit einem Bauteil verbunden, das von der mit dem Spreizelement versehenen Baugruppe verschieden ist und dabei derart hinter der Rastöffnung angeordnet, dass es mit dem Spreizelement in Eingriff bringbar ist, wenn dieses über seine Rastposition hinaus durch die Rastöffnung geführt wird.

Die Erfindung beruht zum einen auf der Erkenntnis, dass sich das in Eingriff bringen des Spreizelementes mit einem jeweils zugeordneten Sicherungselement vereinfachen und automatisieren lässt, wenn das jeweilige Sicherungselement bei der Montage, das heißt, bei dem Einführen der Spreizelemente in die jeweils zugeordneten Rastöffnungen, hinter der Rastöffnung bereitgehalten wird. Indem das jeweilige Spreizelement über seine Rastposition hinaus durch die zugeordnete Rastöffnung hindurchgeführt wird, kann es zu einem geeigneten Zeitpunkt mit dem zugehörigen Sicherungselement in Eingriff gebracht werden. Beim Zurückbewegen (insbesondere Zurückziehen) der Spreizelemente in die jeweilige Rastposition lassen sich dann die Sicherungselemente von dem jeweiligen Bauteil, an dem sie lösbar befestigt sind, ablösen. Jedes Sicherungselement steht dann in dauerhaftem Eingriff mit einem zugeordneten Spreizelement und hält diese im aufgespreizten Zustand.

Weiterhin lässt sich die Anzahl der Fälle, in denen das Airbagmodul und ein zugeordnetes tragendes Kraftfahrzeugteil unter Herausnahme des jeweiligen Sicherungselementes aus einem jeden Spreizelement demontiert werden muss, verringern, wenn sich das Spreizelement in die zugeordnete Rastöffnung einführen und in der Rastposition an dieser fixieren lässt, während das zugeordnete Sicherungselement zunächst noch für eine Sicherung dieser Verbindung bereitgehalten wird. Der Eingriff zwischen einem jeweiligen Spreizelement und dem zugeordneten Sicherungselement wird hierbei erst dann hergestellt, wenn das Spreizelement (z.B. in einem Crash-Fall) über seine Rastposition hinaus bewegt wird, so dass es mit dem Sicherungselement in Eingriff tritt und hierdurch dauerhaft aufgespreizt wird.

Gemäß einer Variante der Erfindung ist vorgesehen, dass bei der Montage des Airbagmoduls an einem zugeordneten tragenden Fahrzeugteil jedes Spreizelement nur soweit durch die zugeordnete Rastöffnung hindurchgeführt wird, bis es sich in seiner Rastposition befindet, in der es im aufgespreizten Zustand den Rand der Rastöffnung hintergreift. Eine Sicherung dieser Verbindung durch ein Sicherungselement besteht dann nicht. Bei dieser Ausführungsform der Erfindung erfolgt eine durch das Sicherungselement gesicherte Verbindung zwischen einem jeweiligen Spreizelement und einer Rastöffnung erst in einem Crash-Fall, In dem unter der Wirkung des am Airbagmodul beim Aufblasen des Gassackes auftretenden Rückstoßes das jeweilige Spreizelement über seine Rastposition hinaus bewegt wird und dabei ein Sicherungselement ergreift und dieses bei der Rückkehr in seine Rastposition mitnimmt, nachdem es von dem Bauteil gelöst worden ist, mit dem es zunächst lösbar verbunden war. Bei dieser Ausführungsform der Erfindung wird also die durch Spreizelemente und zugeordnete Rastöffnungen hergestellte Verbindung zwischen einem Airbagmodul und einem tragenden Fahrzeugteil nur dann durch zusätzliche Sicherungselemente gesichert, wenn diese Verbindung in einem Crash-Fall tatsächlich besonderen Belastungen ausgesetzt wird.

Nach einer anderen Erfindungsvariante kann die Sicherung der Verbindung zwischen Airbagmodul und tragendem Fahrzeugteil auch zu einem geeigneten Zeitpunkt der Montage erfolgen, indem das jeweilige Spreizelement soweit über seine Rastposition hinaus bewegt wird, dass es das zugeordnete, lösbar mit einem Bauteil verbundene Sicherungselement ergreift und dadurch im aufgespreizten Zustand gehalten wird.

Bei beiden Ausführungsformen ist bevorzugt vorgesehen, dass das Spreizelement beim Einführen in die Rastöffnung in eine als Rastposition bezeichnete erste Position bringbar ist, in der es den Rand der Rastöffnung formschlüssig hintergreift und an diesem anliegt, und dass das Spreizelement über die Rastposition hinaus in eine als Eingriffsposition bezeichnete zweite Position bringbar ist, in der es mit dem Sicherungselement in Eingriff tritt, um das Sicherungselement zu ergreifen, von dem zugeordneten Bauteil abzulösen und so den aufgespreizten Zustand des Spreizelementes zu fixieren.

Nach einer bevorzugten Ausführungsform weist das Spreizelement einen Schaft und einen elastisch zusammendrückbaren Spreizabschnitt auf, wobei nach dem Einführen des Spreizelementes in die Rastöffnung bis in eine Rastposition der Schaft des Spreizelementes die Rastöffnung durchgreift und der Spreizabschnitt den Rand der Rastöffnung hintergreift.

Der Schaft des Spreizelementes weist dabei bevorzugt eine solche Länge auf, dass das Spreizelement (über seine Rastposition hinaus) bezüglich der Rastöffnung in eine Eingriffsposition bringbar ist, in der der Schaft des Spreizelementes die Rastöffnung durchgreift und der Spreizabschnitt des Spreizelementes von dem Rand der Rastöffnung (in axialer Richtung,-also entlang-der Erstreckungsrichtung der Rastöffnung) beabstandet ist, wobei in der Eingriffsposition des Spreizelementes dessen Spreizabschnitt das noch lösbar mit einem zugehörigen Bauteil verbundene Sicherungselement ergreifen kann. Mit anderen Worten ausgedrückt, ist die Ausdehnung des Schaftes in Erstreckungsrichtung der Rastöffnung größer als die Ausdehnung der Rastöffnung selbst in dieser Richtung. Hierdurch besteht die Möglichkeit, dass das Spreizelement durch Verschieben des Schaftes in der Rastöffnung in unterschiedliche Längspositionen bezüglich der Rastöffnung bringbar ist, wobei in einer als Rastposition bezeichneten Längsposition das Spreizelement an dem Rand der Rastöffnung anliegt und diese formschlüssig hintergreift und in einer anderen als Eingriffsposition bezeichneten Längsposition das Spreizelement das hinter der Rastöffnung angeordnete und mit einem Bauteil lösbar verbundene Sicherungselement ergreift.

Die beiden miteinander zu verbindenden Baugruppen sind, zum Beispiel mittels mindestens eines elastischen Elementes in Form einer Feder (Schraubenfeder), derart elastisch gegeneinander verspannt, dass das Spreizelement die Tendenz hat, nach dem Einführen in die Rastöffnung seine Rastposition einzunehmen. Das bevorzugt als Schraubenfeder ausgebildete Federelement kann hierbei den Schaft des Spreizelementes umgreifen.

Das Überführen des Spreizelementes in seine Eingriffsposition, in der es das lösbar hinter der Rastöffnung angeordnete Sicherungselement ergreifen kann, folgt in diesem Fall entgegen der Wirkung der elastischen Vorspannung zwischen den beiden Baugruppen, wobei die Rückstellwirkung dieser elastischen Vorspannung auch dazu führt, dass das jeweilige Spreizelement nach dem Ergreifen eines Sicherungselementes (unter Mitnahme des Sicherungselementes) in seine Rastposition zurückgeführt wird.

Bei den beiden miteinander zu verbindenden Baugruppen kann es sich beispielsweise einerseits um einen Bestandteil des Modulgehäuses eines Airbagmoduls, zum Beispiel eine Aufnahme für einen aufzublasenden Gassack und für einen Gasgenerator, handeln und andererseits um einen Bestandteil eines Lenkrades, wie zum Beispiel eine so genannte Kontaktbrücke, die zum Auslösen eines am Lenkrad betätigbaren Signalhornes (einer Hupe) dient. Die Betätigung des Signalhornes kann beispielsweise dadurch erfolgen, dass das Airbagmodul durch Krafteinwirkung auf dessen Abdeckkappe entgegen der Wirkung eines elastischen Elementes relativ zu der Kontaktbrücke verschoben- wird und auf diese einwirkt, wobei einander zugeordnete elektrische Kontaktelemente in Kontakt treten und das Signalhorn auslösen. Die mit der Betätigung des Signalhornes typischerweise verbundene Kraft (durch Einwirkung auf die Kappe des Airbagmoduls mittels der Hand des jeweiligen Fahrers) sollte dabei nicht so groß sein, dass eine Relativbewegung des Airbagmoduls bezüglich der Kontaktbrücke in einem solchen Umfang bewirkt wird, bei der die am Airbagmodul vorgesehene Spreizelemente mit dem hinter der jeweiligen Rastöffnung befindlichen, zugeordneten Sicherungselement in Eingriff treten könnten - zumindest sofern ein solcher Eingriff erfindungsgemäß erst in einem Crash-Fall durch die dann am Airbagmodul wirkende, entsprechend größere Rückstoßkraft erzeugt werden soll.

Das Sicherungselement ist bevorzugt in einfacher Weise an dem Bauteil, mit dem es lösbar verbunden ist, angespritzt. Bei jenem Bauteil handelt es sich bevorzugt um einen Bestandteil der mit der mindestens einen Rastöffnung versehenen Baugruppe.

Um ein definiertes Ablösen des Sicherungselementes von dem zugeordneten Bauteil zu ermöglichen, wenn das Sicherungselement von einem Spreizelement ergriffen und das Spreizelement unter der Wirkung einer Rückstellfeder zurück in seine Rastposition bewegt wird, umfasst die lösbare Verbindung zwischen dem Sicherungselement und dem zugeordneten Bauteil mindestens eine Sollbruchstelle.

Um das Sicherungselement dauerhaft in dem Spreizelement halten zu können und so die. dauerhafte Aufspreizung des Spreizelementes zu gewährleisten, weist das Spreizelement (an seinem Spreizabschnitt) einen Formschlussbereich, insbesondere in Form einer Hinterschnittkontur auf, mit der es das Sicherungselement formschlüssig ergreifen kann. Ferner kann an dem Spreizelement und/oder dem Sicherungselement ein Führungsabschnitt, zum Beispiel in Form einer oder mehrerer konisch verlaufender Führungsflächen, vorgesehen sein, um das in Eingriff Bringen des Spreizelementes mit dem Sicherungselement zu erleichtern. Ein entsprechender Führungsabschnitt kann auch das Einführen des jeweiligen Spreizelementes in eine zugeordnete Rastöffnung erleichtern.

Das Spreizelement kann beispielsweise durch mindestens zwei (durch einen Schlitz voneinander getrennte) Haken gebildet werden, so dass es sich beim Einführen in die Rastöffnung zusammendrücken lässt und sich nach dem Erreichen der Rastposition elastisch-wieder aufweitet.

Bevorzugt weist die Verbindung zwischen dem Airbagmodul und dem tragenden Fahrzeugteil (mindestens zwei) Verbindungsstellen auf, an denen jeweils ein Spreizelement formschlüssig mit einer zugeordneten Rastöffnung in Eingriff steht.

Eine Verbindung zwischen zwei Kraftfahrzeugbaugruppen, nämlich einem Airbagmodul und einem tragenden Fahrzeugteil, mit einer erfindungsgemäßen Verbindungsvorrichtung, ist durch die Merkmale des Anspruchs 32 charakterisiert.

Weitere Einzelheiten und Vorteile der Erfindung werden bei der nachfolgenden Beschreibung eines Ausführungsbeispieles anhand der Figuren deutlich werden:

Es zeigen:
- Figur 1: eine perspektivische Darstellung eines Airbagmoduls und einer Kontaktbrücke eines Lenkrades, mit der das Airbagmodul zu verbinden ist;
- Figur 2: einen Querschnitt durch eine Anordnung gemäß Figur 1 nach Herstellung der Verbindung;
- Figur 3: eine schematisch-perspektivische Darstellung einer möglichen Ausführungsform von Verbindungsmitteln zur Verbindung des Airbagmoduls mit der Kontaktbrücke;
- Figuren 4a - 4c: unterschiedliche Zustände einer Verbindungsstelle gemäß Figur 3;
- Figur 5: eine graphische Darstellung der an der Verbindungsstelle in einem Crash-Fall wirkenden Kräfte;
- Figuren 6a und 6b: eine weitere Ausführungsform einer Verbindungsstelle für eine Anordnung gemäß den Figuren 1 und 2.

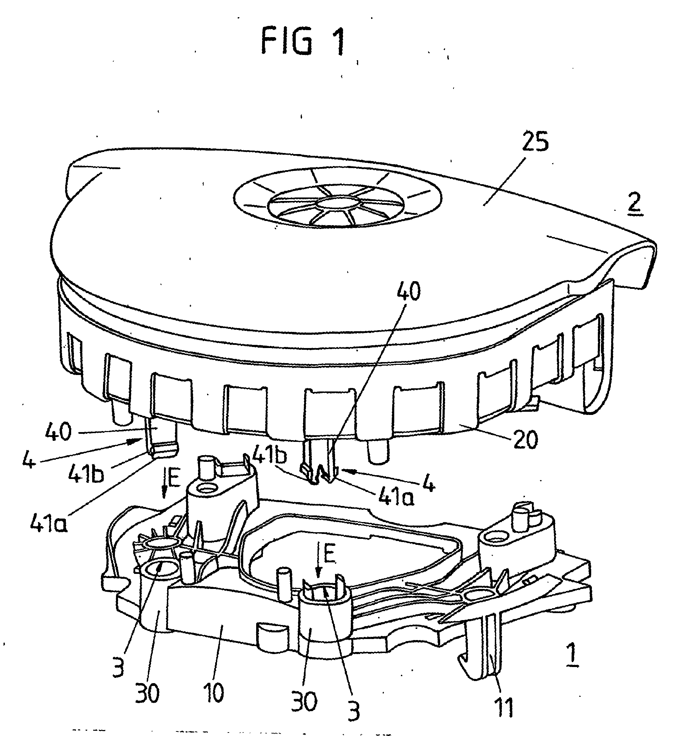

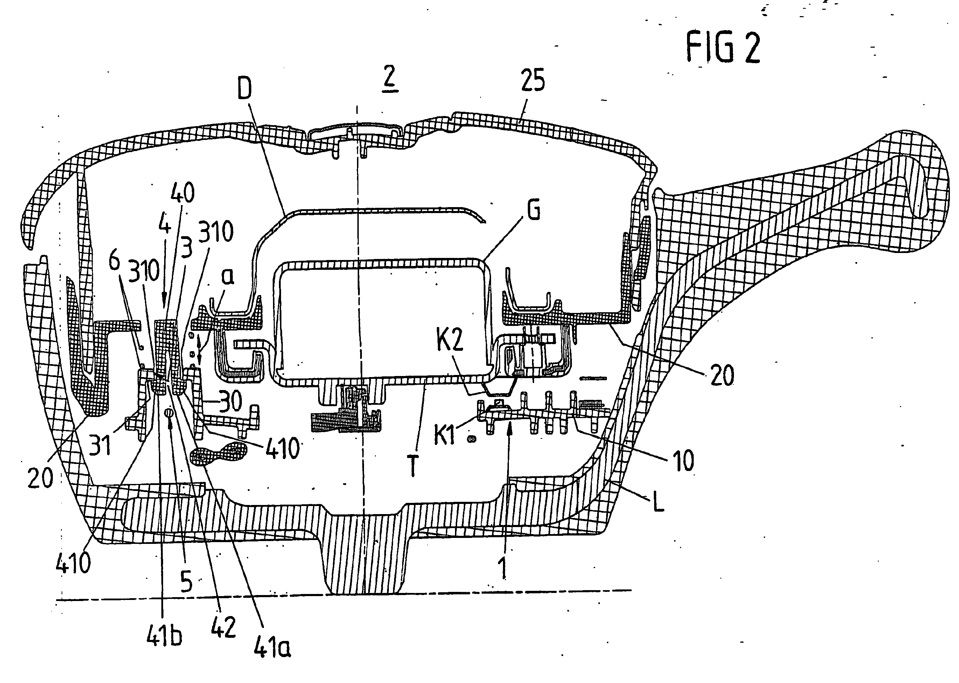

In den Figuren 1 und 2 sind schematisch eine an einem Lenkradskelett L befestigbare Kontaktbrücke 1 sowie ein mit der Kontaktbrücke 1 zu verbindendes (Figur 1) bzw. verbundenes (Figur 2) Airbagmodul dargestellt.

Die Kontaktbrücke 1 umfasst einen Grundkörper 10 mit Haken 11 zur Befestigung an dem Lenkradskelett L sowie mit Rastöffnungen 3 in Form von Durchgangsöffnungen an zwei hohlzylindrischen, am Grundkörper 10 der Kontaktbrücke 1 vorgesehenen Rastkörpern 30.

Das Airbagmodul 2 umfasst ein Modulgehäuse, bestehend aus einer Aufnahme 20 für den Gasgenerator G mit Generatorträger T, für einen zugeordneten Diffusor D sowie für einen mit dem Gasgenerator G aufzublasenden Gassack und aus einer Kappe 25 zum Verschließen der Aufnahme 20. Von dem Modulgehäuse 20, 25 stehen an der Unterseite der Aufnahme 20 zwei Spreizelemente 4 ab, die jeweils einer der Rastöffnungen 3 an der Kontaktbrücke 1 zugeordnet sind. Die beiden Spreizelemente 4 weisen jeweils einen längserstreckten Schaft 40 und einen durch zwei mittels eines Schlitzes 42 voneinander getrennte Haken 41 a, 41 b gebildeten, elastisch in Richtung auf den gespreizten Zustand vorgespannten Spreizabschnitt auf.

Zur Montage des Airbagmoduls 2 an der Kontaktbrücke 1 werden die beiden Spreizelemente 4 in die zugeordneten Rastöffnungen 3 eingeführt, wobei das Einführen durch einander zugeordnete Einführschrägen 310, 410 am Rand 31 der Rastöffnung 3 und an dem Spreizabschnitt 41 a, 41 b erleichtert wird. Bei dem Einführen der Spreizelemente 4 in die zugeordneten Rastöffnungen 3 durch Bewegung des Airbagmoduls 2 bezüglich der Kontaktbrücke 1 entlang einer Einführrichtung E (Figur 1) werden die Spreizabschnitte 41 a, 41 b der Rastelemente 4 radial nach innen zusammengedrückt, wobei die elastische Deformierbarkeit der den Spreizabschnitt 41 a, 41 b bildenden und durch einen Spalt 42 voneinander getrennten Rasthaken genutzt wird.

Die Spreizelemente 4 haben ihre Rastposition bezüglich der Rastöffnungen 3 erreicht, wenn die Spreizabschnitte 41a, 41 b durch die jeweilige Rastöffnung 3 hindurchgeführt sind und den Rand 31 der jeweiligen Rastöffnung 3 formschlüssig hintergreifen. Dies wird dadurch erreicht, dass sich die Spreizabschnitte 41 a, 41 b nach dem Durchdringen der jeweiligen Rastöffnung 3 automatisch wieder radial aufspreizen. In dieser Rastposition durchgreifen die Spreizelemente 4 jeweils mit ihrem Schaft 40 die Rastöffnung 3.

Dabei sind das Airbagmodul 2 und die Kontaktbrücke 3 über elastische Mittel in Form von Schraubenfedern 6, die den Schaft 40 des jeweiligen Spreizelementes 4 umgreifen, derart gegeneinander verspannt, dass das jeweilige Spreizelement 4 die Tendenz hat, sich mit seinem Spreizabschnitt 41a, 41 b an den Rand 31 der Rastöffnung 3 anzulegen.

Ferner ist hinter einer jeweiligen Rastöffnung 3 innerhalb des die Rastöffnung bildenden hohlzylindrischen Rastkörpers 30 ein Sicherungselement 5 in Form eines Sicherungsstiftes angeordnet, der lösbar mit der Kontaktbrücke 1 verbunden ist.

Befindet sich ein jeweiliges Spreizelement 4 in seiner Rastposition, in der es mit seinem Spreizabschnitt 41a, 41b am Rand 31 der zugeordneten Rastöffnung 3 anliegt, so ist das Sicherungselement 5 in axialer Richtung a, das heißt ist Erstreckungsrichtung der Rastöffnung 3 (senkrecht zur Grundfläche der Rastöffnung 3), von dem Spreizabschnitt 41a, 41b des Spreizelementes 4 beabstandet. Demzufolge sind in dem in Figur 2 gezeigten Zustand das Airbagmodul 2 und die Kontaktbrücke 1 über Rastverbindungen, gebildet durch jeweils ein Spreizelement 4, das in eine zugeordnete Rastöffnung 3 eingreift, formschlüssig miteinander verbunden, ohne dass die Spreizelemente 4 durch ein Sicherungselement dauerhaft im aufgespreizten Zustand gehalten würden.

In Normalbetrieb eines Kraftfahrzeugs, in dem keine besonders großen Kräfte an den besagten Verbindungsstellen wirken, ist eine solche Verbindung zwischen Airbagmodul 2 und Kontaktbrücke 1 eines Lenkrades L völlig ausreichend. Probleme hinsichtlich der Festigkeit und Zuverlässigkeit der beschriebenen Verbindung können allenfalls dann auftreten, wenn in einem Crash-Fall das Airbagmodul ausgelöst, also der Gasgenerator G zum Aufblasen eines zugeordneten Gassackes gezündet wird. In diesem Fall wird aufgrund der beim Aufblasen des Gassackes auftretenden Rückstoßkräfte das Airbagmodul 2 bezüglich der Kontaktbrücke 1 in Einführrichtung E (axialer Richtung der Rastöffnungen 3) bewegt, so dass der Spreizabschnitt 41a, 41b des jeweiligen Spreizelementes 4 das zugeordnete Sicherungselement 5 ergreift, wobei dieses ein Stückweit in den Schlitz bzw. Spalt 42 des Spreizelementes 3 eindringt.

Unter der Wirkung der als Rückstellfedern dienenden elastischen Elemente 6 in Form von Schraubenfedern wird dann das Airbagmodul 2 entgegen der Einführrichtung E derart bezüglich der Kontaktbrücke 1 bewegt, dass die Spreizelemente 4 wieder in ihre Rastposition gelangen. Hierbei nehmen sie das jeweils zugeordnete Sicherungselement 5 mit, da dieses aufgrund seiner lösbaren Verbindung mit der Kontaktbrücke 1 (über eine Sollbruchstelle) sich von dieser lösen kann. Das jeweilige Sicherungselement 5 verbleibt dann im mittleren Spalt 42 des zugeordneten Spreizelementes 4 und hält dieses während des Crashs im aufgespreizten Zustand, in dem es mit seinem Spreizabschnitt 41 a, 41 b den Rand 31 der Rastöffnung 3 hintergreift. Somit ist im Fall des Auftretens großer Crash-Kräfte eine hinreichend sichere Verbindung von Airbagmodul 2 und Lenkrad L an den Verbindungsstellen 3, 4 sichergestellt.

Bei all den Kraftfahrzeugen, bei denen im Betrieb kein Crash auftritt, der zu einem Auslösen des Airbagmoduls 2 führt, bleibt es während der gesamten Betriebsdauer bei der Festlegung des Airbagmoduls 2 am Lenkrad L bzw. an der Kontaktbrücke 1 des Lenkrades L mittels Spreizelementen 4 und zugeordneten Rastöffnungen 3 ohne Verwendung von Sicherungselementen 5. Die entsprechenden Verbindungen können daher sehr leicht demontiert werden, indem die Rastelemente 4 an ihren Rastabschnitten 41 a, 41 b radial nach innen zusammengedrückt und dann aus den zugeordneten Rastöffnungen 34 hinausgezogen werden.

In den Figuren 1 und 2 sind ferner einander zugeordnete (elektrische) Kontaktelemente K1 und K2 der Kontaktbrücke 1 einerseits und des Airbagmoduls 2 bzw. Modulgehäuses 20, 25 andererseits erkennbar, die durch Krafteinwirkung auf die Abdeckkappe 25 des Modulgehäuses 20, 25 des Airbagmoduls 2 (entgegen der Wirkung der Schraubenfeder 6) miteinander in Kontakt bringbar sind, wodurch ein Signalhorn (Hupe) elektrisch ausgelöst werden kann.

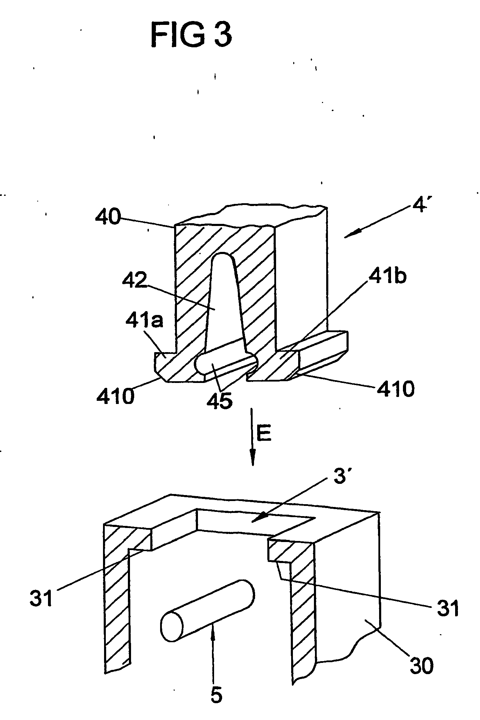

Figur 3 zeigt schematisch in perspektivischer Darstellung ein weiteres Ausführungsbeispiel eines Spreizelementes 4' und einer zugeordneten Rastöffnung 3' die bei einer Verbindungsvorrichtung der in den Figuren 1 und 2 dargestellten Art verwendet werden können.

Das Spreizelement 4' weist einen Schaft 40 sowie einen Spreizabschnitt 41 a, 41 b, gebildet durch zwei mittels eines Spaltes 42 voneinander getrennte Haken, auf, wobei sich der Spreizabschnitt 41 a, 41 b unter Reduzierung der Spaltbreite nach innen zusammendrücken lässt. An seinem in Einführrichtung unteren Ende ist der Spreizabschnitt 41 a, 41 b mit Einführschrägen 410 versehen, um das Einführen in eine an einem Rastkörper 30 ausgebildete Rastöffnung 3' unter Deformation (radialem Zusammendrücken) des Spreizabschnittes 41a, 41 b zu erleichtern.

In Einführrichtung E ist hinter dem Rand 31 der Rastöffnung 3' ein Sicherungselement 5 in Form eines Sicherungsstiftes angeordnet, das von einem durch eine Hinterschnittkontur gebildeten Formschlussbereich 45 des Spreizelementes 4' ergriffen werden kann, wenn dieses in Einführrichtung E über die Rastposition hinaus bewegt wird, in der es mit seinem Spreizabschnitt 41a, 41b am Rand 31 der Rastöffnung 3' anliegt.

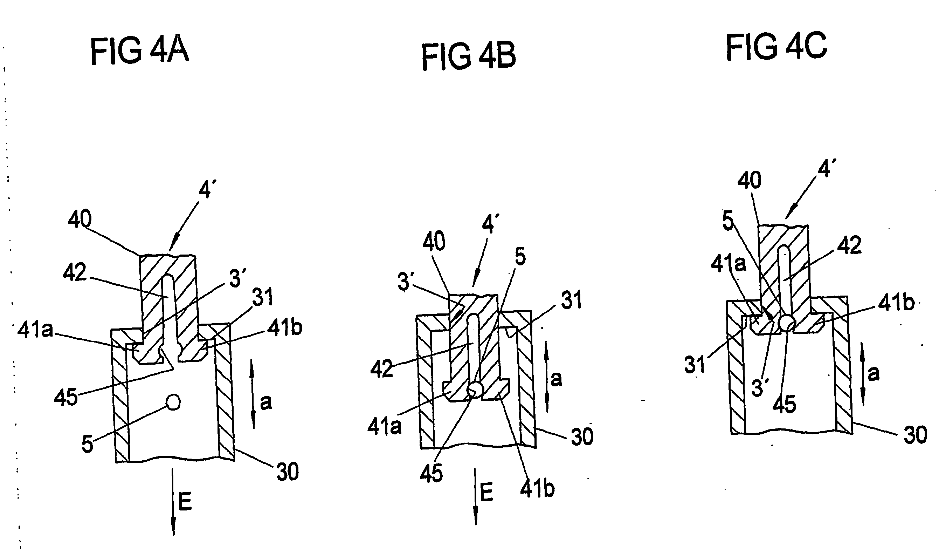

Figur 4a zeigt in einem Querschnitt die Anordnung aus Figur 3 in der Rastposition des Spreizelementes 4', in dem dieses mit seinem Rastabschnitt 41a, 41b am Rand 31 der Rastöffnung 3' des Rastkörpers 30 anliegt.

Figur 4b zeigt die Anordnung in einem Zustand, in dem (Crash-bedingt, als Folge des beim Auslösen des Airbagmoduls auftretenden Rückstoßes) das Spreizelement 4 in Einführrichtung E (axialer Richtung a) soweit über die Rastposition hinaus bewegt worden ist, dass es mit seinem Formschlussbereich 45 das Sicherungselement 5 ergreift. Hierzu ist es erforderlich, dass der Schaft 40 des Spreizelementes 4' eine hinreichend größere Länge (Ausdehnung in Einführrichtung E bzw. axialer Richtung a) aufweist als die Rastöffnung 3', so dass das Spreizelement 4' unterschiedliche Längspositionen bezüglich der Rastöffnung 3' einnehmen kann.

Anschließend bewegt sich das Spreizelement 4', z. B. unter der Wirkung einer Rückstellfeder 6, wie in Figur 2 dargestellt, zurück in seine Rastposition wobei gemäß Figur 4c das Sicherungselement 5 in dem Formschlussbereich 45 des Spreizabschnittes 41a, 41b mitgenommen wird, nachdem es sich von der entsprechenden Baugruppe des Lenkrades (Kontaktbrücke 1, vergleiche Figur 2), an der es lösbar befestigt war, gelöst hat. In dem in Figur 4c gezeigten Zustand ist dann das Spreizelement 4' in seiner Rastposition dadurch gesichert, dass es mittels des im Formschlussbereich 45 aufgenommenen Sicherungselementes 5 dauerhaft im aufgespreizten Zustand gehalten wird. Es besteht dann keine Gefahr, dass es unter der Wirkung besonders großer Kräfte zusammengedrückt werden und durch die Rastöffnung 3' hindurchrutschen könnte, mit der Folge, dass das Airbagmodul 2 nicht mehr zuverlässig am LenKrad L befestigt wäre.

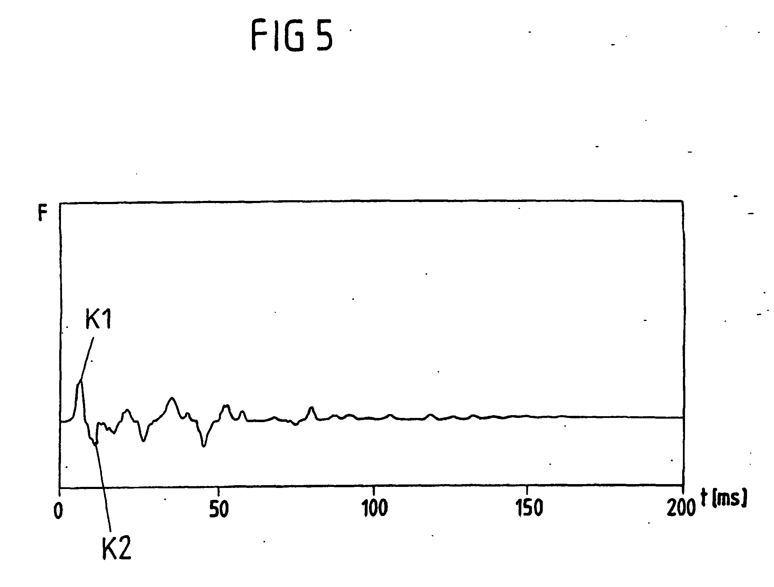

Figur 5 zeigt einen typischen Kraftverlauf F an einer Verbindungsstelle der in den Figuren 1 bis 4c dargestellten Art nach dem Auftreten eines Crash-Falls in Abhängigkeit von der Zeit t (in Millisekunden).

Zum Zeitpunkt t = 0 wird ein Crash, also eine besonders starke Verzögerung des entsprechenden Kraftfahrzeugs detektiert und das Airbagmodul ausgelöst, also der Gasgenerator zum Aufblasen des im Airbagmodul vorgesehenen Gassackes gezündet. Nach weniger als 10 Millisekunden tritt ,eine erste Kraftspritze K1 auf, die die aufgrund des vom Gasgenerator verursachten Rückstoßes vom Airbagmodul 2 über die Feder 6 auf die Kontaktbrücke (vergleiche Figur 2) ausgeübte Kraft repräsentiert. Diese bewirkt das Verschieben des Airbagmoduls 2 unter Deformation der Schraubenfeder 6 bezüglich der Kontaktbrücke 1, mit der Folge, dass die Spreizelemente 4' (wie in Figur 4b dargestellt) jeweils ein zugeordnetes Sicherungselement 5 ergreifen können. Eine zweite, entgegengesetzt wirkende Kraftspritze K2 zeigt die nach etwas mehr als 10 Millisekunden in entgegengesetzter Richtung auf das Airbagmodul 2 wirkende Zugkraft, die die Rückführung der Spreizelemente 4' in ihre jeweilige Rastposition bewirkt.

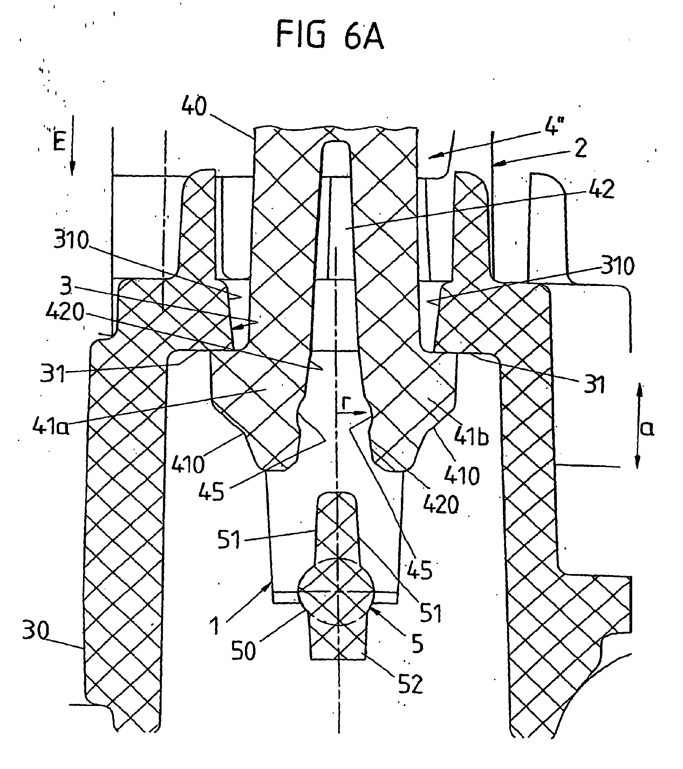

Figur 6a zeigt eine Weiterbildung einer Verbindungsstelle die durch eine Rastöffnung 3 und ein Spreizelement 4" gebildet wird, wobei sich das Spreizelement 4" in dem Zustand gemäß Figur 6a in seiner Rasposition befindet, also mit seinem durch zwei (beidseits eines Spates 42 angeordneten) Rasthaken gebildeten Spreizabschnitt 41 a, 41 b am Rand 31 der Rastöffnung 30 anliegt und diesen hintergreift.

Hinter der Rastöffnung und von dem in seiner Rastposition befindlichen Spreizabschnitt 41 a, 41b in Einführrichtung E bzw. axialer Richtung a beabstandet ist ein lösbar mit einem Bauteil der Kontaktbrücke 1 verbundenes, als Sicherungsstift ausgebildetes Sicherungselement 5 angeordnet, das auf seiner dem Rastabschnitt 41 a, 41b (in Rastposition) zugewandten Seite einen konisch auf den Rastabschnitt 41 a, 41b zulaufenden Führungsabschnitt aufweist. Diesem sind entsprechende, konisch verlaufende Seitenwände 420 des Spaltes 42 des Spreizelements 4" zugeordnet, um das Einführen des Sicherungselements 5 in den Formschlussbereich 45 des Spreizelements 4" zu erleichtern. Auf seiner dem in Rastposition befindlichen Spreizabschnitt 41a, 41b abgewandten Seite weist das Sicherungselement 5 ferner einen von seiner zylindrischen Oberfläche abstehenden Stützabschnitt 52 auf

Anhand Figur 6a wird weiterhin deutlich, dass der Spreizabschnitt 41 a, 41 b des Spreizelementes 4" an seinem unteren äußeren Rand Einführschrägen 410 aufweist, die mit entsprechenden Einführschrägen 310 der Rastöffnung 3 zusammenwirken, um das Einführen des Spreizelementes 4" mit seinem Spreizabschnitt 41a, 41b in die Rastöffnung 3 in Einführrichtung E beim Zusammenbau des Airbagmoduls 2 und der Kontaktbrücke 1 zu erleichtern. Hierbei wird der Spreizabschnitt 41 a, 41 b des Spreizelements 4" in der oben beschriebenen Weise unter Verengung des Spaltes 42 entgegen der Radialen r nach innen deformiert und zusammengedrückt, bis er sich beim Erreichen der in Figur 6a dargestellten Rastposition wieder aufspreizt.

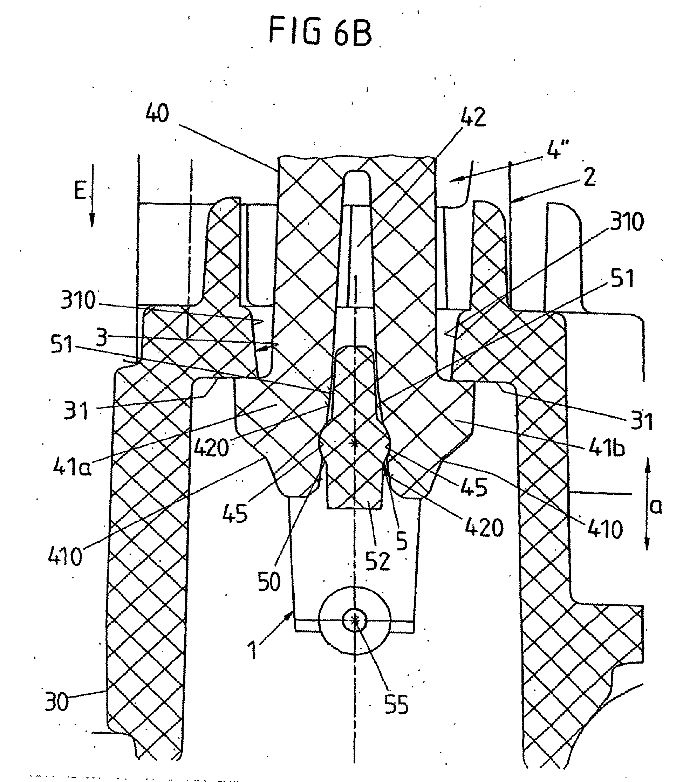

Figur 6b zeigt die Verbindungsstelle aus Figur 6a mit wiederum in seiner Rastposition befindlichem Spreizelement 4", wobei jedoch in dem Formschlussbereich 45 des Spreizelementes 4" das Sicherungselement 5 aufgenommen ist. Dieses drückt die beiden Haken des Spreizabschnittes 41 a, 41 b derart auseinander und weitet hierdurch den Spreizabschnitt 41 a, 41 b derart auf, dass dieser dauerhaft im gespreizten Zustand gehalten wird, in dem er den Rand 31 der Rastöffnung 3 hintergreift. Mit anderen Worten ausgedrückt, wirkt das Sicherungselement 5, wenn es sich in dem Formschlusselement 45 des Spreizelementes 4" befindet, einem radialen Zusammendrücken des Spreizabschnittes 41 a, 41 b entgegen, so dass sich dieser nicht durch die Rastöffnung 3 hindurchführen lässt. Hierdurch wird vermieden, dass sich beim Auftreten besonders großer Kräfte die Verbindung lockern könnte.

Der Übergang von dem in Figur 6a gezeigten Zustand in den in Figur 6b gezeigten Zustand der Verbindungsstelle erfolgt in der Weise, dass (unter Ausnutzung der Länge des Schaftes 40 des Spreizelementes 4" in axialer Richtung a bzw. Einführrichtung E, die größer ist als die Ausdehnung der Rastöffnung 3 entlang dieser Richtung a bzw. E) das Spreizelement 4 in Einführrichtung E über seine Rastposition hinaus verschoben wird, bis es mit seinem in dem Spalt bzw. Schlitz 42 ausgebildeten, eine Hinterschnittkontur definierenden Formschlussbereich 45 den zylindrischen Grundkörper 50 (Sicherungsstift) des Sicherungselementes 5 ergreift. Hierbei wird das Einführen des Sicherungselementes 5 in den Spalt 42 und schließlich den Formschlussbereich 45 des Spreizelementes 4" durch die miteinander zusammenwirkenden Führungsabschnitte 410, 51 des Spreizelementes 4" und des Sicherungselements 5 erleichtert. In Figur 6b ist dabei auch die Sollbruchstelle 55 erkennbar, an der sich das Sicherungselement 5 nach dem Ergreifen durch den Formschlussbereich 45 des Spreizelements 4" von dem zugehörigen Bauteil der Kontaktbrücke 1 gelöst hat.

Die in den Figuren 6a und 6b dargestellte Verbindungsstelle kann auch so ausgelegt sein, dass das Ergreifen des Sicherungselementes 5 durch den Formschlussbereich 45 des Spreizelementes 4" ausschließlich in einem Crash-Fall, insbesondere unter der Wirkung des Rückstoßes, erzeugt von dem Gasgenerator der Airbaganordnung, hervorgerufen wird. Andererseits kann auch vorgesehen sein, dass das Überführen des Spreizelementes 4", von dem in Figur 4a gezeigten Zustand, in dem es sich in aufgespreiztem Zustand, aber ohne Sicherungselement, in seiner Rastposition befindet, in den in Figur 6b gezeigten Zustand, zu einem bestimmten Zeitpunkt bei der Montage der miteinander zu verbindenden Baugruppen (Kontaktbrücke 1 und Airbagmodul 2) erfolgt, wobei in dem letztgenannten Zustand der aufgespreizte Zustand des Spreizabschnittes 41a, 41b durch das Sicherungselement 5 gehalten wird, so dass der Spreizabschnitt 41 a, 41 b nicht aus seiner Rastposition heraus durch die Rastöffnung 3 hindurchgeführt werden kann.

So kann beispielsweise vorgesehen sein, dass die beiden miteinander zu verbindenden Baugruppen zunächst in der Weise zusammengebaut werden, dass sich die jeweiligen Verbindungsstellen in dem in Figur 6a gezeigten Zustand befinden, in dem das Spreizelement 4" sich ohne das Sicherungselement 5 in seiner Rastposition befindet, in der es mit dem Rastabschnitt 41a, 41b den Rand 31 der Rastöffnung 3 hintergreift. Zu einem späteren Zeitpunkt, zum Beispiel wenn das entsprechende Lenkrad und das zugehörige Airbagmodul in ein Kraftfahrzeug eingebaut sind, kann dann die Sicherung der Verbindungsstellen dadurch erfolgen, dass das Spreizelement 4" durch Ergreifen des Sicherungselementes 5 in den in Figur 6b dargestellten Zustand überführt wird, in dem der aufgespreizte Zustand des Spreizabschnittes 41a, 41 b durch das Sicherungselement 5 gehalten wird.

Die Sicherung des aufgespreizten Zustandes des Spreizabschnittes 41 a, 41b kann somit gezielt zu einem Zeitpunkt erfolgen, an dem der Montageprozess soweit abgeschlossen ist, dass ein Entriegeln der Verbindungsstellen nicht mehr notwendig zu sein scheint. Alternativ kann das bereits weiter oben beschriebene In Eingriff Bringen des Spreizelementes 4 mit dem Sicherungselement 5 in einem Crash-Fall vorgesehen sein.

Die in den Figuren 6a und 6b dargestellte Anordnung hat zum einen den Vorteil, dass die das Einführen des Sicherungselementes 5 in den Formschlussabschnitt 45 des Spreizelementes 4" unterstützende Führungsgeometrie mit den Führungsflächen 51 und dem Fortsatz 52 sowie den zugeordneten Innenflächen 420 am Spalt 42 des Spreizelementes 4" das Spreizelement zugleich auf der Rastebene bei der Aufnahme von Scherkräften unterstützt, die bei großer Belastung (in einem Crash-Fall) auftreten können, so dass ein Ausrasten des Spreizelementes aus seiner Rastposition zuverlässig verhindert wird. Bei allen zuvor beschriebenen Ausführungsbeispielen gilt ferner, dass durch die feste Verrastung des Sicherungselementes 5 an dem Spreizelement 4, 4', 4" Schleifgeräusche bei einer Auslösung des Signalhornes vermieden werden.

Da das lösbar mit einem zugeordneten Bauteil, zum Beispiel einem Bauteil der Kontaktbrücke 1, verbundene Sicherungselement an dem entsprechenden Bauteil angespritzt werden kann, erfordert die Bereitstellung des Sicherungselementes 5 keinen zusätzlichen Aufwand und insbesondere keine zusätzlichen, separaten Bauteile, so dass die Logistik-Kosten minimiert werden. Auch ist der Montageaufwand minimiert, da das Sicherungselement 5 nicht als separates Bauteil in das Spreizelement 4, 4', 4" eingeführt werden muss, sondern vielmehr als Bestandteil einer der zu verbindenden Baugruppen (Kontaktbrücke 1) von Anfang an hinter der Rastöffnung 3 bereitgehalten wird. Hierbei ist insbesondere auch eine geeignete Materialpaarung mit dem Spreizelement 4, 4', 4" möglich.

## Patentansprüche

1. Vorrichtung zur Verbindung eines Airbagmoduls mit einem tragenden Fahrzeugteil, mit
- einem Spreizelement, dass an einer der zu verbindenden Baugruppen angeordnet ist,
- einer Rastöffnung, die an einer anderen der zu verbindenden Baugruppen vorgesehen ist und in die das Spreizelement derart einführbar ist, dass es in einer Rastposition in gespreiztem Zustand den Rand der Rastöffnung hintergreift, und
- *einem Sicherungselement, das mit dem Spreizelement derart in Eingriff bringbar ist, dass es das Spreizelement in gespreiztem Zustand hält,
**dadurch gekennzeichnet,**
**dass** das Sicherungselement (5) vor dem in Eingriff Bringen mit dem Spreizelement (4, 4', 4") lösbar mit einem von der mit dem Spreizelement (4, 4', 4") versehenen Baugruppe (2) verschiedenen Bauteil (1) verbunden und dabei derart hinter der Rastöffnung (3) angeordnet ist, dass es mit dem Spreizelement (4, 4', 4") in Eingriff bringbar ist, wenn dieses über seine Rastposition hinaus durch die Rastöffnung (3) geführt wird.

2. Vorrichtung nach Anspruch 1, **dadurch gekennzeichnet, dass** das Spreizelement (4, 4', 4") beim Einführen in die Rastöffnung (3) in eine als Rastposition bezeichnete erste Position bringbar ist, in der es den Rand (31) der Rastöffnung (3) hintergreift, und dass das Spreizelement (4, 4', 4") über die Rastposition hinaus in eine als Eingriffsposition bezeichnete zweite Position bringbar ist, in der es mit dem Sicherungselement (5) in Eingriff tritt.

3. Vorrichtung nach Anspruch 1 oder 2, **dadurch gekennzeichnet, dass** das Spreizelement (4, 4', 4") einen Schaft (40) und einen Spreizabschnitt (41a, 41b) aufweist, wobei nach dem Einführen des Spreizelementes (4, 4', 4") in die Rastöffnung (3) bis in die Rastposition der Schaft (40) die Rastöffnung (3) durchgreift und der Spreizabschnitt (41 a, 41 b) den Rand (31) der Rastöffnung (3) hintergreift.

4. Vorrichtung nach Anspruch 3, **dadurch gekennzeichnet, dass** der Schaft (40) des Spreizelementes (4, 4', 4") eine solche Länge in Erstreckungsrichtung (a, E) der Rastöffnung (3) aufweist, dass das Spreizelement (4, 4', 4") bezüglich der Rastöffnung (3) in eine Eingriffsposition bringbar ist, in der der Schaft (40) die Rastöffnung (3) durchgreift und der Spreizabschnitt (41 a, 41 b) von dem Rand (31) der Rastöffnung (3) beabstandet ist.

5. Vorrichtung nach Anspruch 4, **dadurch gekennzeichnet, dass** die Länge des Schaftes (40) des Spreizelementes (4, 4', 4") entlang der Erstreckungsrichtung (a, E) der Rastöffnung (3) größer ist als die Ausdehnung der Rastöffnung (3) entlang dieser Richtung (a, E).

6. Vorrichtung nach einem der vorhergehenden Ansprüche, **dadurch gekennzeichnet, dass** die beiden zu verbindenden Baugruppen (1, 2) derart elastisch gegeneinander verspannt sind, dass das Spreizelement (4, 4', 4") die Tendenz hat, nach dem Einführen in die Rastöffnung (3) die Rastposition einzunehmen.

7. Vorrichtung nach Anspruch 6, **dadurch gekennzeichnet, dass** die beiden Baugruppen (1, 2) mittels mindestens eines elastischen Elementes (6), insbesondere in Form mindestens einer Feder, gegeneinander verspannt sind.

8. Vorrichtung nach einem der Ansprüche 3 bis 5 und Anspruch 6 oder 7, **dadurch gekennzeichnet, dass** das Federelement (6) den Schaft (40) des Spreizelementes (4, 4', 4") umgreift.

9. Vorrichtung nach einem der vorhergehenden Ansprüche, **dadurch gekennzeichnet, dass** die beiden zu verbindenden Baugruppen (1, 2) durch eine Airbagbaugruppe (2) und eine Lenkradbaugruppe (1) gebildet werden.

10. Vorrichtung nach Anspruch 9, **dadurch gekennzeichnet, dass** die Airbagbaugruppe (2, 20) durch ein Gehäuse (2) eines Airbagmoduls oder einen Bestandteil (20) hiervon gebildet wird.

11. Vorrichtung nach Anspruch 9 oder 10, **dadurch gekennzeichnet, dass** die Lenkradbaugruppe (1) durch eine Kontaktbrücke eines Lenkrades mit Signalhorn-Funktion gebildet wird.

12. Vorrichtung nach Anspruch 10 und 11, **dadurch gekennzeichnet, dass** durch eine Relativbewegung der Airbagbaugruppe (2) bezüglich der Lenkradbaugruppe (1) ein Signalhorn auslösbar ist.

13. Vorrichtung nach Anspruch 12, **dadurch gekennzeichnet, dass** die Bewegung der Airbagbaugruppe (2) entgegen der Wirkung eines elastischen Elementes erfolgt.

14. Vorrichtung nach einem der vorhergehenden Ansprüche, **dadurch gekennzeichnet, dass** das Spreizelement (4, 4', 4") durch eine Relativbewegung der beiden zu verbindenden Baugruppen (1, 2) entlang einer Einführrichtung (E) in die Rastöffnung (3) einführbar ist.

15. Vorrichtung nach einem der vorhergehenden Ansprüche, **dadurch gekennzeichnet, dass** das Spreizelement (4, 4', 4") mit dem Sicherungselement (5) durch eine Relativbewegung der beiden zu verbindenden Baugruppen (1, 2) in Eingriff bringbar ist, so dass das Spreizelement (4, 4', 4") das Sicherungselement (5) ergreift.

16. Vorrichtung nach einem der Ansprüche 6 bis 8 und Anspruch 15, **dadurch gekennzeichnet, dass** die Relativbewegung entgegen der Wirkung des elastischen Elementes (6) erfolgt.

17. Vorrichtung nach Anspruch 16, **dadurch gekennzeichnet, dass** das Ergreifen des Sicherungselementes (5) durch das Spreizelement (4, 4', 4") durch einen Rückstoß bewirkt wird, der beim Aufblasen eines Gassackes des Airbagmoduls durch einen zugeordneten Gasgenerator hervorgerufen wird.

18. Vorrichtung nach Anspruch 16, **dadurch gekennzeichnet, dass** das Sicherungselement (5) bei dem Zusammenbau der beiden miteinander zu verbindenden Baugruppen (1, 2) mit dem Spreizelement (4, 4', 4") in Eingriff bringbar ist.

19. Vorrichtung nach einem der vorhergehenden Ansprüche, **dadurch gekennzeichnet, dass** das Sicherungselement (5) lösbar mit der mit der Rastöffnung (3) versehenen Baugruppe (1) verbunden ist.

20. Vorrichtung nach einem der vorhergehenden Ansprüche, **dadurch gekennzeichnet, dass** das Sicherungselement (5) derart lösbar mit einem Bauteil (1) verbunden ist, dass sich das Sicherungselement (5) von dem zugeordneten Bauteil (1) löst und mit dem Spreizelement (4, 4', 4") in Eingriff bleibt, wenn das Spreizelement (4, 4', 4") nach dem Ergreifen des Sicherungselementes (5) in seine Rastposition zurückgeführt wird.

21. Vorrichtung nach einem der Ansprüche 6 bis 8 und Anspruch 20, **dadurch gekennzeichnet, dass** das Spreizelement (4, 4', 4") unter der Wirkung des elastischen Elementes (6) in die Rastposition zurückführbar ist.

22. Vorrichtung nach einem der vorhergehenden Ansprüche, **dadurch gekennzeichnet, dass** zur lösbaren Verbindung des Sicherungselementes (5) mit einem Bauteil (1) eine Sollbruchstelle (55) vorgesehen ist.

23. Vorrichtung nach einem der vorhergehenden Ansprüche, **dadurch gekennzeichnet, dass** das Sicherungselement (5) zur lösbaren Verbindung mit einem Bauteil (1) an diesem angespritzt ist.

24. Vorrichtung nach einem der vorhergehenden Ansprüche, **dadurch gekennzeichnet, dass** das Spreizelement (4, 4', 4") einen Formschlussbereich (45), insbesondere in Form einer Hinterschnittkontur, aufweist, mit dem das Sicherungselement (5) formschlüssig ergriffen werden kann.

25. Vorrichtung nach einem der vorherigen Ansprüche, **dadurch gekennzeichnet, dass** am Spreizelement (4") und/oder am Sicherungselement (5) ein Führungsabschnitt (51, 410) zum Einführen des Sicherungselementes (5) in das Spreizelement (4") ausgebildet ist.

26. Vorrichtung nach Anspruch 25, **dadurch gekennzeichnet, dass** der Führungsabschnitt (410, 51) zumindest abschnittsweise konisch verläuft.

27. Vorrichtung nach einem der vorherigen Ansprüche, **dadurch gekennzeichnet, dass** an der Rastöffnung (3) und/oder dem Spreizelement (4") Einführschrägen (310, 410) vorgesehen sind, um das Einführen des Spreizelements (4") in die Rastöffnung (3) zu erleichtern.

28. Vorrichtung nach einem der vorherigen Ansprüche, **dadurch gekennzeichnet, dass** der Spreizabschnitt (41a, 41b) des Spreizelementes (4, 4', 4") derart elastisch ausgebildet ist, dass er sich beim Einführen des Spreizelementes (4, 4', 4") in die Rastöffnung (3) zusammendrücken lässt und sich beim Erreichen der Rastposition wieder aufweitet.

29. Vorrichtung nach einem der vorhergehenden Ansprüche, **dadurch gekennzeichnet, dass** das Spreizelement (4, 4', 4") einen durch mindestens zwei hakenförmige Bereiche (41 a, 41 b) gebildeten Spreizabschnitt aufweist.

30. Vorrichtung nach einem der vorherigen Ansprüche, **dadurch gekennzeichnet, dass** das Sicherungselement (5) einen zylinderförmigen Grundkörper (50) umfasst.

31. Vorrichtung nach einem der vorherigen Ansprüche, **dadurch gekennzeichnet, dass** zur Verbindung des Airbagmoduls mit dem tragenden Fahrzeugteil mindestens zwei Rastöffnungen (3) und zugeordnete Spreizelemente (4, 4', 4") vorgesehen sind.

32. Verbindung zwischen einem Airbagmodul und einem tragenden Fahrzeugteil mit einer Vorrichtung nach einem der vorhergehenden Ansprüche.

## Claims

1. Device for connection of an airbag module to a supporting vehicle component, with
- an expanding element which is arranged on one of the subassemblies to be connected,
- a latching opening which is provided on another of the subassemblies to be connected and into which the expanding element can be introduced in such a manner that, in a latching position in the expanded state, it engages behind the edge of the latching opening, and
- a securing element which can be brought into engagement with the expanding element in such a manner that it holds the expanding element in the expanded state,
**characterized in that**, before being brought into engagement with the expanding element (4, 4', 4"), the securing element (5) is connected releasably to a component (1) being different from the subassembly (2) provided with the expanding element (4, 4', 4" ) and, in the process, is arranged behind the latching opening (3) in such a manner that it can be brought into engagement with the expanding element (4, 4', 4") when the latter is guided beyond its latching position through the latching opening (3).

2. The device according to Claim 1, **characterized in that** the expanding element (4, 4' , 4 " ), when introduced into the latching opening (3), can be brought into a first position which is referred to as the latching position and in which it engages behind the edge (31) of the latching opening (3), and **in that** the expanding element (4, 4', 4") can be brought beyond the latching position into a second position, which is referred to as the engagement position and in which it enters into engagement with the securing element (5).

3. Device according to Claim 1 or 2, **characterized in that** the expanding element (4, 4', 4") has a stem (40) and an expanding section (41a, 41b), the stem (40) reaching through the latching opening (3), after the expanding element (4, 4', 4") is introduced into the latching opening (3) until it reaches the latching position, and the expanding section (41a, 41b) engaging behind the edge (31) of the latching opening (3).

4. Device according to Claim 3, **characterized in that** the stem (40) of the expanding element (4, 4', 4") is of such a length in the direction of extent (a, E) of the latching opening (3) that the expanding element (4, 4', 4 ") can be brought with respect to the latching opening (3) into an engagement position, in which the stem (40) reaches through the latching opening (3) and the expanding section (41a, 41b) is spaced apart from the edge (31) of the latching opening (3).

5. Device according to Claim 4, **characterized in that** the length of the stem (40) of the expanding element (4, 4', 4") along the direction of extent (a, E) of the latching opening (3) is greater than the extent of the latching opening (3) along this direction (a, E).

6. Device according to one of the preceding claims, **characterized in that** the two subassemblies (1, 2) to be connected are braced elastically against each other in such a manner that the expanding element (4, 4', 4") has the tendency, after being introduced into the latching opening (3), of taking up the latching position.

7. Device according to Claim 6, **characterized in that** the two subassemblies (1, 2) are braced against each other by means of at least one elastic element (6), in particular in the form of at least one spring.

8. Device according to one of Claims 3 to 5 and 6 or 7, **characterized in that** the spring element (6) engages around the stem (40) of the expanding element (4, 4', 4").

9. Device according to one of the preceding claims, **characterized in that** the two subassemblies (1, 2) to be connected are formed by an airbag subassembly (2) and a steering wheel subassembly (1).

10. Device according to Claim 9, **characterized in that** the airbag subassembly (2, 20) is formed by a housing (2) of an airbag module or by a component (20) thereof.

11. Device according to Claim 9 or 10, **characterized in that** the steering wheel subassembly (1) is formed by a contact bridge of a steering wheel with a signal horn function.

12. Device according to Claims 10 and 11, **characterized in that** a signal horn can be triggered by a movement of the airbag subassembly (2) relative to the steering wheel subassembly (1).

13. Device according to Claim 12, **characterized in that** the airbag subassembly (2) moves counter to the action of an elastic element.

14. Device according to one of the preceding claims, **characterized in that** the expanding element (4, 4', 4") can be introduced into the latching opening (3) by a relative movement of the two subassemblies (1, 2), which are to be connected, along an introductory direction (E).

15. Device according to one of the preceding claims, **characterized in that** the expanding element (4, 4', 4' ') can be brought into engagement with the securing element (5) by means of a relative movement of the two subassemblies (1, 2) to be connected, such that the expanding element (4, 4', 4") grasps the securing element (5).

16. Device according to one of Claims 6 to 8 and Claim 15, **characterized in that** the relative movement takes place counter to the action of the elastic element (6).

17. Device according to Claim 16, **characterized in that** the grasping of the securing element (5) by the expanding element (4, 4', 4") is brought about by a recoil which is caused by an associated gas generator when an airbag of the airbag module is inflated.

18. Device according to Claim 16, **characterized in that**, when the two subassemblies (1, 2) to be connected to each other are assembled, the securing element (5) can be brought into engagement with the expanding element (4, 4', 4" ).

19. Device according to one of the preceding claims, **characterized in that** the securing element (5) is connected releaseably to the subassembly (1) provided with the latching opening (3).

20. Device according to one of the preceding claims, **characterized in that** the securing element (5) is connected releasably to a component (1) in such a manner that the securing element (5) is detached from the associated component (1) and remains in engagement with the expanding element (4, 4', 4") when the expanding element (4, 4', 4") is guided back into its latching position after grasping the securing element (5) .

21. Device according to one of Claims 6 to 8 and claim 20, **characterized in that** the expanding element (4, 4', 4") can be guided back into the latching position under the action of the elastic element (6).

22. Device according to one of the preceding claims, **characterized in that** a predetermined breaking point (55) is provided for the releasable connection of the securing element (5) to a component (1).

23. Device according to one of the preceding claims, **characterized in that**, for the releasable connection to a component (1), the securing element (5) is formed thereon by injection molding.

24. Device according to one of the preceding claims, **characterized in that** the expanding element (4, 4', 4") has a form-fitting region (45), in particular in the form of a undercut contour, with which the securing element (5) can be grasped in a form-fitting manner.

25. Device according to one of the preceding claims, **characterized in that** a guide section (51, 410) for introducing the securing element (5) into the expanding element (4") is formed on the expanding element (4") and/or on the securing element (5).

26. Device according to Claim 25, **characterized in that** the guide section (410, 51) has a conical profile at least in some sections.

27. Device according to one of the preceding claims, **characterized in that** introducing slopes (310, 410) are provided on the latching opening (3) and/or the expanding element (4'') in order to facilitate the introduction of the expanding element (4") into the latching opening (3).

28. Device according to one of the preceding claims, **characterized in that** the expanding section (41a, 41b) of the expanding element (4, 4', 4") is designed elastically in such a manner that it can be compressed when the expanding element (4, 4', 4") is introduced into the latching opening (3) and widens again when the latching position is reached.

29. Device according to one of the preceding claims, **characterized in that** the expanding element (4, 4', 4") has an expanding section formed by at least two hook-shaped regions (41a, 41b).

30. Device according to one of the preceding claims, **characterized in that** the securing element (5) comprises a cylindrical basic body (50).

31. Device according to one of the preceding claims, **characterized in that** at least two latching openings (3) and associated expanding elements (4, 4', 4") are provided for the connection of the airbag module to the supporting vehicle component.

32. Connection between an airbag module and a supporting vehicle component to a device according to one of the preceding claims.

## Revendications

1. Dispositif permettant de relier un module airbag à une partie support de véhicule avec
- un élément d'écartement qui est disposé sur un des sous-groupes à relier,
- un orifice d'enclenchement qui est prévu sur un autre des sous-groupes à relier et dans lequel l'élément d'écartement peut être introduit de manière à passer derrière le bord de l'orifice d'enclenchement dans une position d'enclenchement à l'état écarté et
- un élément de blocage qui peut être mis en prise avec l'élément d'écartement de manière à maintenir l'élément d'écartement à l'état écarté,
**caractérisé en ce**
**que** l'élément de blocage (5) est relié de manière amovible à un composant (1) différent du sous-groupe (2) doté de l'élément d'écartement (4, 4', 4") avant d'être mis en prise avec l'élément d'écartement (4, 4', 4") et est disposé derrière l'orifice d'enclenchement (3) de telle manière qu'il peut être mis en prise avec l'élément d'écartement (4, 4', 4") lorsque celui-ci est guidé à travers l'orifice d'enclenchement (3) au-delà de sa position d'enclenchement.

2. Dispositif selon la revendication 1, **caractérisé en ce que** l'élément d'écartement (4, 4', 4") peut, lors de l'introduction dans l'orifice d'enclenchement (3) être amené dans une première position appelée position d'enclenchement, dans laquelle il passe derrière le bord (31) de l'orifice d'enclenchement (3), et **en ce que** l'élément d'écartement (4, 4', 4") peut être amené dans une deuxième position appelée position de prise, au-delà de la position d'enclenchement, dans laquelle il entre en prise avec l'élément de blocage (5).

3. Dispositif selon la revendication 1 ou 2, **caractérisé en ce que** l'élément d'écartement (4, 4', 4") comporte une tige (40) et une section d'écartement (41a, 41b), la tige (40) traversant l'orifice d'enclenchement (3) après l'introduction de l'élément d'écartement (4, 4', 4") dans l'orifice d'enclenchement jusque dans la position d'enclenchement, et la section d'écartement (41a, 41b) passant derrière le bord (31) de l'orifice d'enclenchement (3).

4. Dispositif selon la revendication 3, **caractérisé en ce que** la tige (40) de l'élément d'écartement (4, 4', 4") a une longueur telle dans le sens d'extension (a, E) de l'orifice d'enclenchement (3) que l'élément d'écartement (4, 4', 4") peut être mis dans une position de prise par rapport à l'orifice d'enclenchement (3) dans laquelle la tige (40) traverse l'orifice d'enclenchement (3) et la section d'écartement (41a, 41b) est écartée du bord (31) de l'orifice d'enclenchement (3).

5. Dispositif selon la revendication 4, **caractérisé en ce que** la longueur de la tige (40) de l'élément d'écartement (4, 4', 4") dans le sens d'extension (a, E) de l'orifice d'enclenchement (3) est supérieure à l'extension de l'orifice d'enclenchement (3) dans ce sens (a, E).

6. Dispositif selon l'une des revendications précédentes, **caractérisé en ce que** les deux sous-groupes (1, 2) à relier sont serrés de manière élastique l'un contre l'autre de telle façon que l'élément d'écartement (4, 4', 4") a tendance à prendre la position d'enclenchement après l'introduction dans l'orifice d'enclenchement (3).

7. Dispositif selon la revendication 6, **caractérisé en ce que** les deux sous-groupes (1,2) sont serrés l'un contre l'autre au moyen d'au moins un élément élastique (6), en particulier sous la forme d'au moins un ressort.

8. Dispositif selon l'une des revendications 3 à 5 et selon la revendication 6 ou 7, **caractérisé en ce que** l'élément à ressort (6) entoure la tige (40) de l'élément d'écartement (4, 4', 4").

9. Dispositif selon l'une des revendications précédentes, **caractérisé en ce que** les deux sous-groupes à relier (1, 2) sont formés par un sous-groupe à airbag (2) et un sous-groupe à volant (1).

10. Dispositif selon la revendication 9, **caractérisé en ce que** le sous-groupe à airbag (2, 20) est formé par un boîtier (2) d'un module d'airbag ou par un composant (20) de ce dernier.

11. Dispositif selon la revendication 9 ou 10, **caractérisé en ce que** le sous-groupe à volant (1) est formé par un pont de contact d'un volant avec fonction de klaxon.

12. Dispositif selon la revendication 10 ou 11, **caractérisé en ce qu'**un klaxon peut être déclenché par un mouvement relatif du sous-groupe à airbag (2) par rapport au sous-groupe à volant (1).

13. Dispositif selon la revendication 12, **caractérisé en ce que** le mouvement du sous-groupe à airbag (2) est opposé à l'action d'un élément élastique.

14. Dispositif selon l'une des revendications précédentes, **caractérisé en ce que** l'élément d'écartement (4, 4', 4") peut être introduit dans l'orifice d'enclenchement (3) par un mouvement relatif des deux sous-groupes à relier (1, 2) le long d'une direction d'introduction (E).

15. Dispositif selon l'une des revendications précédentes, **caractérisé en ce que** l'élément d'écartement (4, 4', 4") peut être mis en prise avec l'élément de blocage (5) par un mouvement relatif des deux sous-groupes (1, 2) à relier de telle manière que l'élément d'écartement (4, 4', 4") saisit l'élément de blocage (5).

16. Dispositif selon l'une des revendications 6 à 8 et selon la revendication 15, **caractérisé en ce que** le mouvement relatif est opposé à l'action de l'élément élastique (6).

17. Dispositif selon la revendication 16, **caractérisé en ce que** la saisie de l'élément de blocage (5) à travers l'élément d'écartement (4, 4', 4") est provoquée par un contrecoup dû au gonflage d'un sac à gaz du module d'airbag par un générateur de gaz qui lui est affecté.

18. Dispositif selon la revendication 16, **caractérisé en ce que** l'élément de blocage (5) peut être mis en prise avec l'élément d'écartement (4, 4', 4") lors de l'assemblage des deux sous-groupes à relier (1,2).

19. Dispositif selon l'une des revendications précédentes, **caractérisé en ce que** l'élément de blocage (5) est relié de manière amovible avec le sous-groupe (1) doté de l'orifice d'enclenchement (3).

20. Dispositif selon l'une des revendications précédentes, **caractérisé en ce que** l'élément de blocage (5) est relié de manière amovible avec un composant (1) de telle manière que l'élément de blocage (5) se détache du composant (1) qui lui est affecté et reste en prise avec l'élément d'écartement (4, 4', 4") lorsque l'élément d'écartement (4, 4', 4") est ramené dans sa position d'enclenchement après la saisie de l'élément de blocage (5).

21. Dispositif selon l'une des revendications 6 à 8 et selon la revendication 20, **caractérisé en ce que** l'élément d'écartement (4, 4', 4") peut être ramené dans la position d'enclenchement sous l'effet de l'élément élastique (6).

22. Dispositif selon l'une des revendications précédentes, **caractérisé en ce qu'**un point destiné à la rupture (55) est prévu pour relier de manière amovible l'élément de blocage (5) et un composant (1).

23. Dispositif selon l'une des revendications précédentes, **caractérisé en ce que** l'élément de blocage (5) est moulé par injection sur un composant (1) pour être relié de manière amovible à ce dernier.

24. Dispositif selon l'une des revendications précédentes, **caractérisé en ce que** l'élément d'écartement (4, 4', 4") comporte une zone à engagement positif (45), en particulier sous la forme d'un contour de contre-dépouillement, avec laquelle l'élément de blocage (5) peut être saisi par engagement positif.

25. Dispositif selon l'une des revendications précédentes, **caractérisé en ce qu'**une section de guidage (51, 410) est réalisée sur l'élément d'écartement (4") et/ou sur l'élément de blocage (5) pour introduire l'élément de blocage (5) dans l'élément d'écartement (4").

26. Dispositif selon la revendication 25, **caractérisé en ce qu'**au moins certaines sections de la section de guidage (410, 51) sont coniques.

27. Dispositif selon l'une des revendications précédentes, **caractérisé en ce que** des obliques d'introduction (310, 410) sont prévues sur l'orifice d'enclenchement (3) et/ou sur l'élément d'écartement (4"), afin de faciliter l'introduction de l'élément d'écartement (4") dans l'orifice d'enclenchement (3).

28. Dispositif selon l'une des revendications précédentes, **caractérisé en ce que** la section d'écartement (41a, 41b) de l'élément d'écartement (4, 4', 4") est réalisée élastique de manière à pouvoir être comprimée lors de l'introduction de l'élément d'écartement (4, 4', 4") dans l'orifice d'enclenchement (3) et à se dilater à nouveau lorsque la position d'enclenchement est atteinte.

29. Dispositif selon l'une des revendications précédentes, **caractérisé en ce que** l'élément d'écartement (4, 4', 4") comporte une section d'écartement formée par au moins deux zones (41a, 41b) en forme de crochet.

30. Dispositif selon l'une des revendications précédentes, **caractérisé en ce que** l'élément de blocage (5) comprend un corps de base (50) en forme de cylindre.

31. Dispositif selon l'une des revendications précédentes, **caractérisé en ce qu'**au moins deux orifices d'enclenchement (3) et des éléments d'écartement (4, 4', 4") qui leur sont affectés sont prévus pour relier le module d'airbag à la partie support de véhicule.

32. Liaison entre un module d'airbag et une partie support de véhicule avec un dispositif selon une des revendications précédentes.
